# EUROPÄISCHE PATENTANMELDUNG

(11) **EP 4 737 868 A1**
(43) Veröffentlichungstag der Anmeldung: **06.05.2026**
(21) Anmeldenummer: 25202973.1
(22) Anmeldetag: 18.09.2025
(51) Int. Cl.: G01G 11/00

(54) **WIEGEVORRICHTUNG UND VERFAHREN ZUM WIEGEN VON PRODUKTEN**

(30) Priorität: 29.10.2024 DE 102024131475
(71) Anmelder: MULTIVAC Marking & Inspection GmbH & Co. KG, 32130 Enger (DE)
(72) Erfinder: Treise, Arthur, 32257 Bünde (DE); Frank, Hendrik, 32130 Enger (DE)
(74) Vertreter: Grünecker Patent- und Rechtsanwälte PartG mbB

(57) **Zusammenfassung**

Wiegevorrichtung zum Wiegen von Produkten, die Wiegevorrichtung umfassend einen Wiegebereich, eine Transporteinrichtung zum Transportieren von Produkten zum Wiegebereich, eine Erkennungseinrichtung stromauf des Wiegebereichs und eine Steuereinheit, wobei die Erkennungseinrichtung zum Erkennen einer zweidimensionalen Kontur eines Produktes in der Transporteinrichtung ausgebildet ist und wobei die Steuereinheit ausgebildet ist, ein Wiegen des Produktes im Wiegebereich basierend auf der erkannten Kontur zu steuern und/oder eine Bearbeitung des Produktes basierend auf der erkannten Kontur und/oder einem Wiegeergebnis im Wiegebereich zu steuern.

## Beschreibung

Die vorliegende Erfindung betrifft eine Wiegevorrichtung zum Wiegen von Produkten gemäß Anspruch 1 sowie ein Verfahren zum Wiegen von Produkten mit einer Wiegevorrichtung gemäß Anspruch 9.

### Stand der Technik

Wiegevorrichtungen sowie Verfahren zum Wiegen von Produkten sind aus dem Stand der Technik grundsätzlich bekannt. Dabei werden die Produkte einem Wiegebereich der Wiegevorrichtung zugeführt, hier gewogen und anschließend abtransportiert und ggf. weiterverarbeitet. Bei hinsichtlich ihrer Kontur und Anordnung nicht festgelegten Produkten kann das Wiegeergebnis jedoch durch überlappende Produkte oder qualitativ nicht ausreichende Produkte, die bspw. mit dem eigentlichen Produkt verbundene Produktreste umfassen, die sich über einen längeren Bereich in Transportrichtung ziehen, verfälscht werden.

Aus der EP 1 625 367 B1 ist eine entsprechende Wiegevorrichtung bekannt, bei der stromaufwärts des Wiegebereichs ein Sensor, wie etwa eine Lichtschranke, angeordnet ist, um die Produktlänge zu bestimmen.

Bisherige Möglichkeiten zum gezielten Erkennen der Produkte sind jedoch fehleranfällig und können eine gleichbleibende Qualität des Wiegeergebnisses und der weiteren Bearbeitung der Produkte nicht garantieren.

### Aufgabe

Ausgehend vom bekannten Stand der Technik besteht die zu lösende technische Aufgabe somit darin, eine Wiegevorrichtung zum Wiegen von Produkten sowie ein Verfahren zum Wiegen von Produkten mit einer Wiegevorrichtung anzugeben, mit denen das Wiegeergebnis und/oder die weitere Bearbeitung der Produkte verbessert werden kann.

### Lösung

Diese Aufgabe wird erfindungsgemäß durch die Wiegevorrichtung zum Wiegen von Produkten gemäß Anspruch 1 sowie das Verfahren zum Wiegen von Produkten mit einer Wiegevorrichtung gemäß Anspruch 9 gelöst. Vorteilhafte Weiterbildungen der Erfindung sind in den Unteransprüchen erfasst.

Erfindungsgemäß ist eine Wiegevorrichtung zum Wiegen von Produkten vorgesehen, die Wiegevorrichtung umfassend einen Wiegebereich, eine Transporteinrichtung zum Transportieren von Produkten zum Wiegebereich, eine Erkennungseinrichtung stromauf des Wiegebereichs und eine Steuereinheit, wobei die Erkennungseinrichtung zum Erkennen einer zweidimensionalen Kontur eines Produktes in der Transporteinrichtung ausgebildet ist und wobei die Steuereinheit ausgebildet ist, ein Wiegen des Produktes im Wiegebereich basierend auf der erkannten Kontur zu steuern und/oder eine Bearbeitung des Produktes basierend auf der erkannten Kontur und/oder einem Wiegeergebnis im Wiegebereich zu steuern.

Der Wiegebereich ist im Sinne der vorliegenden Erfindung der Bereich der Wiegevorrichtung, in dem ein Wiegen des Produktes stattfindet. Er ist räumlich zumindest in Transportrichtung der Produkte in der Transporteinrichtung begrenzt und kann auf grundsätzlich bekannte Weise ausgebildet sein.

Die zweidimensionale Kontur kann insbesondere zumindest indikativ dafür sein bzw. eine Aussage darüber erlauben, ob das Produkt aus einem oder mehreren Stücken besteht und wie sich die Masse des Produkts zumindest schätzungsweise in Transportrichtung und quer zur Transportrichtung verteilt.

Dass das Wiegen des Produktes in dem Wiegebereich basierend auf der erkannten Kontur gesteuert wird, kann insbesondere einen Zeitpunkt des Wiegens und/oder eine Korrektur des gemessenen Wiegeergebnisses umfassen. Das Steuern der Bearbeitung basierend auf dem Wiegeergebnis und/oder der erkannten Kontur kann stromauf des Wiegebereichs (dann nur abhängig von der erkannten Kontur) oder stromab des Wiegebereichs erfolgen und in letzterem Fall abhängig von dem Wiegeergebnis oder abhängig von der erkannten Kontur oder abhängig von beidem sein. Die Ausgestaltung der weiteren Bearbeitung ist im Sinne der Erfindung grundsätzlich nicht beschränkt.

Mit der erfindungsgemäßen Wiegevorrichtung kann, insbesondere bei Naturprodukten wie beispielsweise Fleischstücken, die hinsichtlich ihrer Massenverteilung in der Transporteinrichtung und/oder ihrer äußeren Form variieren können, die Genauigkeit des Wiegeergebnisses und die nachträgliche Bearbeitung der Produkte verbessert werden.

Es kann vorgesehen sein, dass die Steuereinheit ausgebildet ist, basierend auf der erkannten Kontur zu bestimmen, ob ein Produkt aus einem oder mehreren Stücken besteht.

Dies kann bspw. durch grundsätzlich bekannte Programme zur Bildverarbeitung und/oder unter Verwendung künstlicher Intelligenz zur Musterauswertung bewirkt werden, die etwa ein aufgenommenes Bild oder andere Informationen, die von der Erkennungseinrichtung beim Erkennen der zweidimensionalen Kontur aufgenommen wurden, auswerten und bestimmen, ob das Produkt aus einem oder mehreren Stücken besteht. Durch Bestimmen ob das Produkt aus einem oder mehreren Stücken besteht, kann die weitere Verarbeitung gezielter gesteuert werden, insbesondere das Wiegen im Wiegebereich abhängig von der Anzahl der Stücke, die das Produkt bilden, gesteuert werden, indem bspw. der Transport des Produktes durch die Transporteinrichtung gesteuert wird. Auch die weitere Bearbeitung des Produktes, bspw. das Einbringen des Produktes in eine Verpackung, kann bei Kenntnis der Anzahl der Stücke aus denen das Produkt besteht, anders gesteuert werden, indem bspw. nach dem Wiegen die Stücke separiert werden. Dies erhöht die Zuverlässigkeit beim Wiegen und der weiteren Bearbeitung des Produktes.

Die Erkennungseinrichtung kann eine Kamera und/oder eine Vielzahl von Lichtschranken umfassen. Die Kamera kann zum Aufnehmen von Bildern im sichtbaren Bereich oder auch im UV-Bereich und/oder im Infrarotbereich ausgebildet sein. Mit diesen Ausführungsformen ist eine zuverlässige Erkennung der Konturen von Produkten möglich.

Die Bearbeitung kann ein Sortieren von Produkten umfassen. Das Sortieren von Produkten kann insbesondere nicht nur abhängig von dem Wiegeergebnis, sondern auch von der erkannten Kontur sein, indem bspw. ein gewogenes Produkt, das aus mehreren Stücken besteht, bei der nachfolgenden Bearbeitung unterschiedlichen Produktströmen zugeführt wird, indem einzelne Stücke des Produktes verschiedenen Produktströmen zugeordnet werden. Hierdurch kann abhängig von dem Wiegeergebnis und der erkannten Kontur eine zuverlässigere Zuordnung von Produkten bspw. zu Verpackungen erfolgen.

Es kann vorgesehen sein, dass die Steuereinheit ausgebildet ist, basierend auf der erkannten Kontur einen Zustand einer stromauf angeordneten Bearbeitungskomponente zum Bearbeiten der Produkte zu bestimmen. Die Bearbeitungskomponente kann bspw. ein Schneidmesser oder eine Schneidmesseranordnung sein oder diese umfassen. Die Bearbeitungskomponenten unterliegen Verschleiß und dies kann sich auf die Kontur des Produktes auswirken, indem bspw. beim Schneiden oder sonstigem Auftrennen größerer Produktmengen mit zunehmendem Verschleiß die Qualität der Schnittkanten abnimmt oder ein Trennen der Produktmenge nicht mehr zuverlässig erfolgt. Mit dieser Ausführungsform kann dies erkannt und dem Rechnung getragen werden, indem bspw. Bearbeitungsintervalle abhängig von dem Verschleiß bestimmt werden.

In einer Ausführungsform ist vorgesehen, dass die Bearbeitung stromauf des Wiegebereichs erfolgt oder wobei die Bearbeitung stromab des Wiegebereichs erfolgt. Erfolgt die Bearbeitung stromauf des Wiegebereichs, wird sie abhängig von der erkannten Kontur und eventuellen weiteren Prozessparametern oder Informationen durchgeführt. Erfolgt sie stromab des Wiegebereichs, kann sie grundsätzlich zusätzlich oder alternativ auch abhängig von dem Wiegeergebnis erfolgen. Mit dieser Ausführungsform ist ein Steuern der Bearbeitung des Produktes über einen größeren Teil der Verarbeitungsstrecke möglich.

Es kann vorgesehen sein, dass stromauf des Wiegebereichs und stromab der Erkennungseinrichtung eine Schneideinrichtung angeordnet ist und dass die Bearbeitung ein Schneiden des Produktes basierend auf der erkannten Kontur umfasst. Das Schneiden kann als weitere Bearbeitung in einer Ausführungsform bspw. ein Schneiden des Produktes in unterschiedlich viele Stücke abhängig von der erkannten Kontur umfassen. Hiermit kann der Variabilität insbesondere in der Kontur von Naturprodukten (wie etwa Fleischstücken) Rechnung getragen werden, was nicht nur das Schneidergebnis, sondern optional auch das Wiegeergebnis verbessern kann.

Die Steuereinheit kann ausgebildet sein, basierend auf dem Wiegeergebnis und/oder der erkannten Kontur eine Ausgabe an einen Bediener auf einer Anzeigevorrichtung zu bewirken.

Die Ausgabe kann auf einem Display erfolgen du bspw. angeben, dass das Wiegeergebnis bestimmten Anforderungen nicht genügt und/oder dass ein Wartungsintervall erreicht ist oder noch nicht erreicht ist, sodass eine bestimmte Komponente der Wiegevorrichtung oder einer stromauf angeordneten Vorrichtung (insbesondere stromauf des Wiegebereichs und/oder stromauf der Erkennungseinrichtung) gewartet werden muss. Mit dieser Ausführungsform kann die Bedienung vereinfacht und gleichzeitig ein zuverlässiger Betrieb sichergestellt werden.

Erfindungsgemäß ist weiterhin ein Verfahren zum Wiegen von Produkten mit einer Wiegevorrichtung vorgesehen, die Wiegevorrichtung umfassend einen Wiegebereich, eine Transporteinrichtung zum Transportieren von Produkten zum Wiegebereich, eine Erkennungseinrichtung stromauf des Wiegebereichs und eine Steuereinheit, wobei die Erkennungseinrichtung zum Erkennen einer zweidimensionalen Kontur eines Produktes in der Transporteinrichtung ausgebildet ist und wobei das Verfahren ein Steuern des Wiegens des Produktes im Wiegebereich basierend auf der erkannten Kontur und/oder ein Steuern einer Bearbeitung des Produktes basierend auf der erkannten Kontur und/oder einem Wiegeergebnis im Wiegebereich umfasst.

Mit diesem Verfahren kann eine zuverlässige Bearbeitung von Produkten auch mit variabler Kontur sichergestellt werden.

Es kann vorgesehen sein, dass die Steuereinheit basierend auf der erkannten Kontur bestimmt, ob ein Produkt aus einem oder mehreren Stücken besteht. Diese Ausführungsform erlaubt es, die weitere Bearbeitung und insbesondere das Wiegen auch bei Vorhandensein mehrerer Stücke zuverlässig durchzuführen.

Die Erkennungseinrichtung kann eine Kamera und/oder eine Vielzahl von Lichtschranken umfassen.

Die Bearbeitung kann ein Sortieren von Produkten umfassen. Das Sortieren von Produkten kann insbesondere ein unterschiedliches weiteres Transportieren nach dem Wiegebereich etwa abhängig von der Anzahl der Stücke des Produktes umfassen. Hierdurch kann die weitere Bearbeitung der Produkte zuverlässiger erfolgen.

Es kann vorgesehen sein, dass die Steuereinheit basierend auf der erkannten Kontur einen Zustand einer stromauf angeordneten Bearbeitungskomponente zum Bearbeiten der Produkte bestimmt. Hierdurch kann die Zuverlässigkeit im Betrieb der Wiegevorrichtung weiter verbessert werden.

Die Bearbeitung kann stromauf des Wiegebereichs erfolgen, wobei optional stromauf des Wiegebereichs und stromab der Erkennungseinrichtung eine Schneideinrichtung angeordnet ist und wobei die Bearbeitung ein Schneiden des Produktes basierend auf der erkannten Kontur umfasst; oder die Bearbeitung kann stromab des Wiegebereichs erfolgen.

Es kann vorgesehen sein, dass die Steuereinheit basierend auf dem Wiegeergebnis und/oder der erkannten Kontur eine Ausgabe an einen Bediener auf einer Anzeigevorrichtung bewirkt. Diese Ausgabe kann die Bedienung der Wiegevorrichtung verbessern.

### Kurze Beschreibung der Figuren

- Figur 1: zeigt eine schematische Ansicht einer Wiegevorrichtung gemäß einer Ausführungsform.
- Figur 2: zeigt ein Fließschema zur Bearbeitung von Produkten gemäß einer Ausführungsform.

### Ausführliche Beschreibung

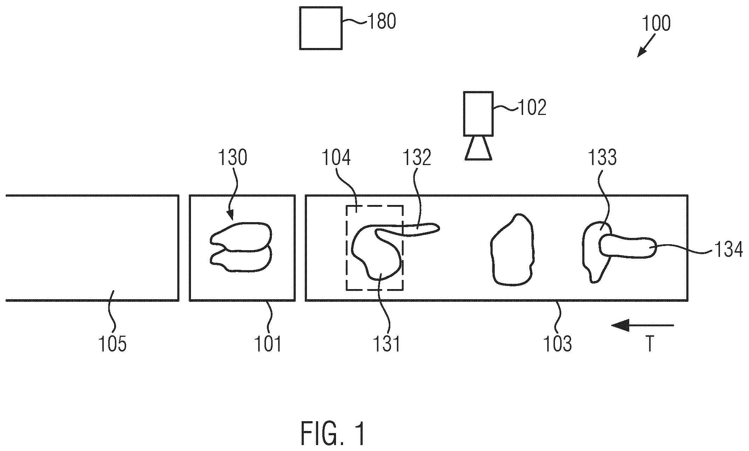

Figur 1 zeigt eine Ausführungsform einer Wiegevorrichtung 100 gemäß der vorliegenden Erfindung.

Die Wiegevorrichtung 100 umfasst einen Wiegebereich zum Wiegen von Produkten 130. Der Wiegebereich 101 kann bspw. eine Wiegezelle umfassen, die das Gewicht eines Produktes 130 in dem Wiegebereich 101 bestimmen kann. Die Erfindung ist diesbezüglich nicht beschränkt. Die Produkte sind erfindungsgemäß nicht beschränkt. Es kann sich jedoch bevorzugt um Lebensmittel, insbesondere unverarbeitete Lebensmittel wie beispielsweise Fleischstücke handeln. Alternativ können auch verarbeitete Lebensmittel wie Käse, Wurst oder ähnliches als Produkte im Sinne der Erfindung verstanden werden.

Stromauf des Wiegebereichs ist erfindungsgemäß eine Erkennungseinrichtung 102 angeordnet, die ausgebildet ist, eine Kontur eines bestimmten Produktes 130 zu bestimmen. Weiterhin kann eine Transporteinrichtung 103 vorgesehen sein, die ausgebildet ist, Produkte zumindest zwischen der Erkennungseinrichtung 102 und dem Wiegebereich 101 zu transportieren, sodass diese von der Erkennungseinrichtung 102 zum Wiegebereich 101 gefördert werden können und im Wiegebereich 101 gewogen werden können.

Die Erkennungseinrichtung 102 ist im Sinne der Erfindung ebenfalls in ihrer Ausgestaltung nicht beschränkt, ist jedoch zumindest so ausgestaltet, dass sie eine wenigstens zweidimensionale Kontur eines Produktes 130 ermitteln kann. Diese zweidimensionale Kontur kann insbesondere eine Form oder Gestalt des Produktes in einer Richtung parallel zur Transportrichtung T der Produkte in der Transporteinrichtung 103 und einer Richtung quer zur Transportrichtung T umfassen, sodass bspw. eine Kontur der Produkte in einer Ebene parallel zur Transportebene der Produkte von der Erkennungseinrichtung 102 bestimmt werden kann.

Beispielsweise kann die Erkennungseinrichtung 102 als eine Vielzahl von Lichtschranken oberhalb der Transporteinrichtung 103 ausgebildet sein, wobei mittels jeder Lichtschranke zumindest an einem bestimmten Punkt das Vorhandensein oder Nichtvorhandensein eines Produktes erfasst werden kann. Die Lichtschranken können in einer Linie quer zur Transportrichtung T angeordnet sein, sodass entlang dieser Linie von der Erkennungseinrichtung das Vorhandensein oder Nichtvorhandensein eines Produktes im Bereich jeder Lichtschranke bestimmt werden kann. Durch Transport der Produkte in Transportrichtung T wird hierdurch über einen bestimmten Zeitraum die zweidimensionale Kontur des Produktes ermittelt.

Alternativ kann die Erkennungseinrichtung auch bspw. als oberhalb der Transportebene angeordnete Kamera ausgeführt sein, die entweder kontinuierlich oder in bestimmten zeitlichen Abständen Bilder von Produkten in der Transporteinrichtung aufnimmt. Anhand dieser Bilder kann bspw. mithilfe der Erkennungseinrichtung selbst oder einer der Wiegeeinrichtungen zugeordneten Steuereinheit, wie bspw. einem Computer mit zugeordnetem Prozessor und Speicher mit geeigneten Programminstruktionen durch an sich bekannte Programme zur Bildverarbeitung bestimmt werden, ob ein Produkt vorhanden ist und wenn ja, wie dessen Kontur beschaffen ist.

Das Erkennen der Kontur kann insbesondere ein Erkennen einer Anzahl von Teilen, aus denen das Produkt besteht, umfassen. So kann es insbesondere bei Naturprodukten wie bspw. Fleischstücken oder Ähnlichem vorkommen, dass mehrere Stücke des Produktes nebeneinander oder auch überlappend zueinander angeordnet sind oder dass das Produkt aus einem Hauptanteil und Produktresten, wie bspw. einem Faden 132 besteht oder diese umfasst. Dies kann durch Bestimmen der Kontur festgestellt werden, da zweidimensionale Informationen anstelle von lediglich eindimensionalen oder binären Informationen zum Vorhandensein oder Nichtvorhandensein von Produkt zur Verfügung stehen.

Erfindungsgemäß ist vorgesehen, dass die Wiegevorrichtung, basierend auf der erkannten Kontur des Produktes das Wiegen des Produktes im Wiegebereich steuern kann und/oder dass die Steuereinheit ausgebildet ist, eine Bearbeitung des Produktes basierend auf der erkannten Kontur und/oder einem Wiegeergebnis im Wiegebereich zu steuern.

Das Steuern des Wiegens des Produktes im Wiegebereich basierend auf der erkannten Kontur kann insbesondere umfassen, dass die Steuereinheit ein von dem Wiegebereich gemessenes Gewicht eines Produktes bspw. weiterverarbeitet, abhängig davon, welche Kontur für dieses Produkt von der Erkennungseinrichtung erkannt wurde. Wurde bspw. von der Erkennungseinrichtung erkannt, dass das Produkt aus einem Hauptbestandteil 131 und Produktresten 132 besteht oder diese umfasst, kann die Steuereinheit das Wiegeergebnis modifizieren, indem bspw. eine Korrektur des gemessenen Gewichts stattfindet, die berücksichtigt, dass der oder die Produktreste 132 ein nur vergleichsweise geringes Gewicht zum Gesamtgewicht des Produktes beitragen und im Anschluss an das Wiegen entfernt werden sollen. Das Gewicht des Produktes kann so von der Steuereinheit korrigiert werden, indem beispielsweise basierend auf statistischen Modellen das Gewicht des Hauptbestandteils 131 geschätzt wird und als Produktgewicht gespeichert oder für die weitere Steuerung der Bearbeitung verwendet wird.

Wird stattdessen bspw. festgestellt, dass das Produkt aus mehreren (wenigstens zwei) überlappenden aber voneinander getrennten Stücken 133 und 134 besteht, kann bspw. anhand der aufgenommenen Kontur eine Schätzung des Gewichts der einzelnen Stücke erfolgen und das Wiegeergebnis modifiziert werden, indem bspw. mit einer Abschätzung des Gewichts der einzelnen Stücke das in dem Wiegebereich gemessene Gewicht des gesamten Produktes (umfassend bspw. die Stücke 133 und 134) auf die einzelnen Stücke verteilt wird. Dies kann anschließend genutzt werden, um ein Steuern einer weiteren Bearbeitung der Produkte basierend auf dem Wiegeergebnis durchzuführen, etwa indem die Stücke in verschiedene Verpackungen verpackt werden.

Alternativ oder zusätzlich zu einem Steuern des Wiegens im Wiegebereich bzw. dem möglichen Modifizieren des Wiegeergebnisses basierend auf der erkannten Kontur kann vorgesehen sein, dass ein Steuern der weiteren Bearbeitung der Produkte basierend sowohl auf dem Wiegeergebnis und/oder auf der erkannten Kontur erfolgt.

Dazu zeigt Figur 1 lediglich schematisch einen Bereich 105 stromab des Wiegebereichs 101, der für eine weitere Bearbeitung der Produkte beispielhaft ist. Die weitere Bearbeitung der Produkte kann bspw. ein Verpacken der Produkte in Verpackungsmulden abhängig von dem Gewicht der einzelnen Produkte umfassen. Dabei kann bspw. vorgesehen sein, dass die Steuereinheit 180 Greifer oder andere Mittel zum weiteren Transport der Produkte so ansteuert, dass Produkte in vorgesehenen Verpackungen abhängig von ihrem Gewicht so eingebracht werden, dass das gesamte Produktgewicht einer bestimmten Verpackung stets einem Sollwert im Wesentlichen entspricht (bspw. mit Abweichungen von bis zu 1% oder bis zu 2% oder bis zu 5%). Dies kann von der Steuereinheit nicht nur unter Verwendung des Wiegeergebnisses, sondern auch unter Verwendung der erkannten Kontur ausgeführt werden, indem bspw. eine Produktmasse bzw. -Gewicht von 500g basierend auf der erkannten Kontur als zu zwei Stücken von Produkt mit unterschiedlichem Gewicht von bspw. 200g und 300g gehörig erkannt wird. Die 200g und 300g schweren Stücke können dann in verschiedene Verpackungen verpackt werden, bspw. in Verpackungen mit einem Zielgewicht von Produkt von 350g, wobei diesen Stücken dann noch weitere in der Verpackung so hinzugefügt werden können, dass das Zielgewicht erreicht wird. Durch die Kombination des Wiegebereichs und der Erkennungseinrichtung ist mithin eine verbesserte weitere Bearbeitung der Produkte möglich.

Als weitere Ausführungsform kann alternativ oder zusätzlich vorgesehen sein, dass Produkte die aus einer Hauptmasse und bspw. einem Faden oder ähnlichen Produktresten bestehen oder diese umfassen, nach dem Wiegebereich noch zugeschnitten werden, indem bspw. Produktfäden, auf die nur ein geringes Gewicht entfällt, die aber die gesamte Größe des Produkts maßgeblich beeinflussen, durch ein Schneidelement wie bspw. ein umlaufendes Messer von der Hauptmasse des Produkts entfernt werden. Die Hauptmasse des Produkts kann dann mit ihrem bspw. aufgrund der erkannten Kontur und dem Wiegeergebnis geschätzten Gewicht weitertransportiert werden und bspw. einer Verpackung abhängig von dem Gewicht der Hauptproduktmasse zugeführt werden.

Auch andere Ausführungsformen sind denkbar. Insbesondere kann bspw. auch alternativ oder zusätzlich zu den eben beschriebenen Ausführungsformen ein Sortieren der Produkte abhängig bspw. vom Wiegeergebnis und/oder der erkannten Kontur erfolgen, indem bspw. Produkte mit Produktfäden oder anderen Produktresten an einer Hauptmasse in der Wiegevorrichtung zurückgeführt werden und erneut bspw. geschnitten werden, sodass keine weiteren Produktreste wie etwa Produktfäden neben der Hauptmasse verbleiben. Hierdurch kann die Qualität der Produkte verbessert werden.

Alternativ oder zusätzlich kann auch vorgesehen sein, dass zwischen der Erkennungseinrichtung und dem Wiegebereich eine Schneideinrichtung oder sonstige Bearbeitungseinrichtung zum Bearbeiten der Produkte 104 angeordnet ist. Grundsätzlich kann zwischen dem Wiegebereich 101 und der Erkennungseinrichtung 102 mit der Bearbeitungseinrichtung 104 eine beliebige Bearbeitung der Produkte erfolgen, bevor diese gewogen werden. Dies kann bspw. ein Zuschneiden oder ein Befreien von Produktresten etwa basierend auf der erkannten Kontur umfassen. Insbesondere im Falle einer Schneideinrichtung kann vorgesehen sein, dass abhängig von der erkannten Kontur etwa von überflüssigen oder bestimmte Anforderungen nicht erfüllenden Produktresten wie bspw. Produktfäden mit geringer Ausdehnung in eine Richtung senkrecht zur Transportrichtung T, aber einer viel größeren, bspw. zehnmal größeren Ausdehnung entlang der Transportrichtung T diese Produktreste von der Hauptproduktmasse entfernt werden.

Eine solche Bearbeitungseinrichtung kann alternativ oder zusätzlich auch stromauf der Erkennungseinrichtung 102 angeordnet sein und bspw. dazu genutzt werden, um Produkte vorzuschneiden. Diese Schneideinrichtung kann ein oder mehrere rotierende Messer umfassen oder auch auf andere grundsätzlich bekannte Art ausgebildet sein.

Während des Betriebs einer solchen Schneideinrichtung werden die Schneidelemente wie bspw. rotierende Messer verschleißen, was zu einer Beeinträchtigung des Schnittergebnisses über lange Zeiträume führen kann.

Die Erkennungseinrichtung 102 erkennt die Kontur der zugeschnittenen Produkte und es kann vorgesehen sein, dass die Steuereinheit abhängig von der erkannten Kontur feststellen kann, ob die Schneideinrichtung ordnungsgemäß funktioniert bzw. etwaiger Verschleiß ein Maß erreicht hat, das eine Wartung der Schneideinrichtung oder einzelner Elemente wie bspw. eines oder mehrerer Schneidmesser erforderlich macht. Basierend hierauf kann dann beispielsweise eine Ausgabe an einen Bediener erfolgen, dass dieser Wartungsarbeiten an der Bearbeitungseinrichtung vornehmen soll.

Hierzu kann eine hier nicht weiter dargestellte Anzeigevorrichtung, die bspw. Teil der Steuereinheit sein kann oder mit dieser zumindest verbunden sein kann, vorgesehen sein. Die Anzeigevorrichtung kann bspw. als Display oder auch als Touchdisplay ausgeführt sein. Auf dieser können die beschriebenen Informationen angezeigt werden.

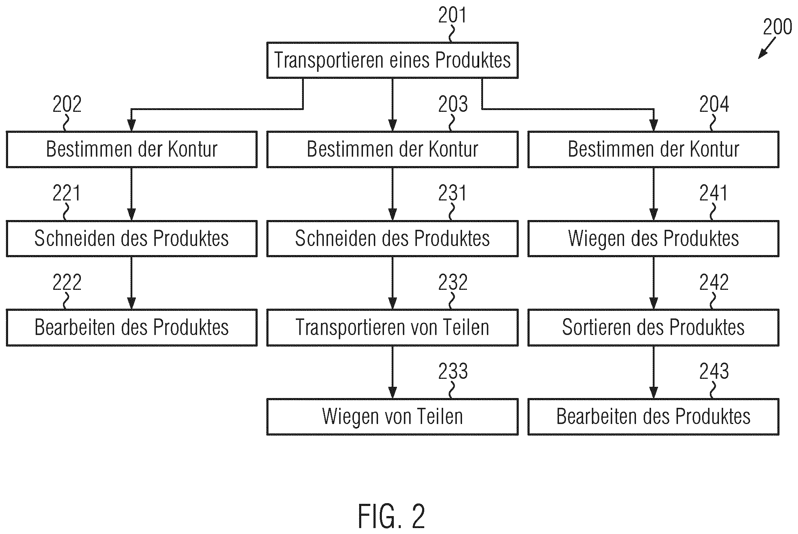

Figur 2 zeigt ein Fließschema eines Verfahrens zum Wiegen von Produkten mit einer Wiegevorrichtung, wie sie bspw. im Zusammenhang mit der Figur 1 bereits beschrieben wurde. Sämtliche der im Zusammenhang mit der Figur 2 beschriebenen Ausführungsformen sind mit den Ausführungsformen der Figur 1 kombinierbar.

Das Verfahren beginnt mit einem Schritt 201, während die Produkte bspw. entlang der Transporteinrichtung 103 der Figur 1 transportiert werden.

Während des Transports oder bevor die Produkte transportiert werden, kann bspw. ein Zuschneiden oder sonstiges Bearbeiten der Produkte erfolgt sein.

In jedem der Schritte 202 bis 204 findet dann ein Bestimmen der Kontur mithilfe der Erkennungseinrichtung statt. Dieses Bestimmen der Kontur kann, wie bereits beschrieben, durch eine Vielzahl von Lichtschranken oder durch eine Kamera oder auch eine Kombination davon erfolgen und erlaubt zumindest das Bestimmen einer Kontur bevorzugt in einer Ebene parallel zur Transportebene oder in einer Ebene senkrecht zur Transportebene, die die Transportrichtung jedoch mit einschließt.

In einer Ausführungsform des Verfahrens kann im Schritt 221 vorgesehen sein, dass direkt nach dem Bestimmen der Kontur das Wiegen des Produktes im Wiegebereich erfolgt. Es findet in dieser Ausführungsform zwar optional ein Transport von der Erkennungseinrichtung zum Wiegebereich zwischen den Schritten 202 und 221 statt, es erfolgt jedoch keine weitere Bearbeitung des Produktes.

Anschließend kann im Schritt 222 ein grundsätzlich beliebiges weiteres Bearbeiten des Produktes entweder basierend auf der bestimmten Kontur und/oder basierend auf dem Wiegeergebnis erfolgen. Das Bearbeiten kann lediglich einen Schritt oder eine Vielzahl von Teilschritten umfassen und kann bspw. ein Transportieren abhängig von der bestimmten Kontur oder dem bestimmten Gewicht bzw. dem Wiegeergebnis umfassen oder ein Verpacken der Produkte in Verpackungen oder ein Zuschneiden der Produkte umfassen.

In einem alternativen Verfahren, das mit dem Schritt 203 des Bestimmens der Kontur beginnt, kann abhängig von der bestimmten Kontur im Schnitt 231 stromab der Erkennungseinrichtung zunächst ein Schneiden des Produktes erfolgen. Das Schneiden des Produktes kann bspw. umfassen, dass Fäden oder überschüssige Produktreste entfernt werden. Dies kann basierend auf der erkannten Kontur des Produktes erfolgen und beispielsweise von der im Zusammenhang mit Figur 1 beschrieben Steuereinheit gesteuert werden.

Anschließend können die Teile des Produktes entweder gleichmäßig in Transportrichtung T befördert werden oder unterschiedliche Teile der Produkte können in unterschiedliche Richtungen befördert werden. In jedem Fall passieren im Schritt 233 zumindest ein Teil des Produktes den Wiegebereich und wird hier gewogen. Dies kann bspw. der Teil des Produktes sein, der die Hauptmasse des Produktes umfasst.

In einem alternativen Verfahren, das mit dem Schritt 204 des Bestimmens der Kontur beginnt, kann sich dem Bestimmen der Kontur analog zu dem mit dem Schritt 202 beginnenden Verfahren ein Wiegen des Produktes im Schritt 241 anschließen.

Basierend auf der bestimmten Kontur und/oder dem bestimmten Wiegeergebnis kann im Schritt 242 dann ein Sortieren der Produkte erfolgen. Das Sortieren der Produkte kann bspw. durch gezielten Transport von verschiedenen Produkten, die bspw. eine bestimmte Kontur und/oder ein bestimmtes Gewicht aufweisen, in unterschiedliche Transportrichtungen umfassen, sodass die Produkte abhängig von dem Wiegeergebnis und/oder abhängig von der bestimmten Kontur separiert werden. Die Produkte können, müssen jedoch nicht anschließend gesammelt werden, um für die weitere Bearbeitung verfügbar zu sein.

In jedem Fall kann im Schritt 243 nach dem Sortieren im Schritt 242 ein Bearbeiten der Produkte erfolgen. Dieses Bearbeiten der Produkte wird an den sortierten Produkten durchgeführt und kann je nach Charakteristik des Produktes, bspw. je nach Gewicht des Produktes oder je nach Kontur des Produktes oder beidem, eine unterschiedliche Bearbeitung erforderlich machen. Es kann aber auch vorgesehen sein, dass alle Produkte unabhängig von dem Wiegeergebnis und/oder unabhängig von der Kontur auf die gleiche Art bearbeitet werden.

Das weitere Bearbeiten der Produkte basierend auf der erkannten Kontur oder dem Wiegeergebnis oder beidem kann auch umfassen, dass bspw. aufgrund ihrer Kontur und/oder ihres Gewichts als qualitativ nicht ausreichende erkannte Produkte entweder mit einer bestimmten Kennzeichnung versehen werden oder bspw. im Schritt 242 aussortiert werden. Die weitere Bearbeitung kann dann ein vollständiges Ausschleusen der Produkte umfassen, sodass diese nicht weiterverwendet werden.

Auch ein Rückführen der Produkte kann im Rahmen des Sortierens erfolgen. Hierbei können die Produkte nach Passieren des Wiegebereichs abhängig vom Wiegeergebnis und/oder der erkannten Kontur aussortiert und über eine entsprechende Transporteinrichtung wieder in die ursprüngliche Transporteinrichtung 103 stromauf der Erkennungseinrichtung eingeschleust werden. Dies kann bspw. der Fall sein, wenn aufgrund von Diskrepanzen zwischen der bestimmten Kontur und dem Wiegeergebnis oder sonstigen Eigenschaften des Produktes insbesondere der Feststellung, dass die erkannte Kontur mit einer erwarteten Kontur nicht übereinstimmt oder dieser nicht zumindest entspricht, erfolgen. Ähnliche Rückführungen sind bspw. auch für Teigwaren denkbar.

Wie bereits in Bezug auf Figur 1 beschrieben, kann auch vorgesehen sein, dass etwaiger Verschleiß von Komponenten geprüft wird. Dies kann grundsätzlich anhand der Qualität der Bearbeitung der Produkte, die durch die Erkennungseinrichtung erkannt werden kann, bestimmt und anschließend eine Wartung bewirkt werden. Am Beispiel von gefrorenen Produkten kann dies auch im Zusammenhang mit dem Schneiden gefrorener Produkte umfassen, dass geprüft wird, ob die Produkte selbst nicht nur ordnungsgemäß geschnitten sind, sondern zusätzlich, ob die Produkte selbst noch ausreichend gefroren sind. Dies lässt sich anhand des Schnittbildes der geschnittenen Produkte auf grundsätzlich bekannte Weise bestimmen und kann somit bei einer Schneideinrichtung, die stromauf der Erkennungseinrichtung angeordnet ist, durch die Erkennungseinrichtung überprüft werden. Dies reduziert den Aufwand an Komponenten, die notwendig sind, um ein korrektes Funktionieren der Vorrichtung zu gewährleisten.

Anschließend kann, wenn festgestellt wird, dass das Produkt nicht ausreichend gefroren ist oder wenn bspw. erkannt wird, dass ein geschnittenes Produkt keine ausreichende Schnittkante aufweist, ein Produktionsparameter oder Bearbeitungsparameter der Produkte geändert werden, wie bspw. eine Umgebungstemperatur oder eine Drehzahl von Schneidelementen wie Schneidmessern.

Alternativ oder zusätzlich kann bei einer Bearbeitung der Produkte stromauf der Erkennungseinrichtung durch Bediener (wie bspw. manuelles Zerlegen oder Zuschneiden) auch vorgesehen sein, dass, sofern festgestellt wird, dass die Qualität der Produkte bestimmten Anforderungen nicht genügt, eine Anleitung an einen Bediener ausgegeben wird (bspw. auf der bereits beschriebenen Anzeigevorrichtung), mit der der Bediener bei dem manuellen Bearbeiten des Produktes angeleitet werden kann, um hier Fehler zu vermeiden.

Während im Zusammenhang mit der Figur 1 und der 2 die Kamera grundsätzlich als beliebige Kamera beschrieben wurde, kann vorgesehen sein, dass die Kamera insbesondere eine Farbkamera oder eine Hyperspektralkamera ist oder eine solche umfasst. Hiermit können neben der erkannten Kontur der Produkte auch weitere Charakteristika, wie insbesondere die Farbe der Produkte, als Qualitätsmerkmal genutzt werden, um bspw. festzustellen, ob ein Produkt aussortiert werden muss oder bestimmte Qualitätsanforderungen erfüllt.

Weiterhin wurden in den bisherigen Ausführungsformen Erkennungseinrichtungen beschrieben, die die Produkte im Wesentlichen von oben erkennen, insbesondere im Zusammenhang mit der Figur 1. Es versteht sich jedoch, dass die Anordnung der Erkennungseinrichtungen grundsätzlich beliebig ist und je nach Notwendigkeit bspw. auch ausschließlich von der Seite erfolgen kann oder auch vorgesehen sein kann, dass die Produkte im Bereich der Erkennungseinrichtungen zunächst von einer ersten Seite und dann nach Wenden der Produkte durch eine Wendeeinrichtung von einer zweiten Seite betrachtet werden. Dabei kann die Erkennungseinrichtung bspw. in Transportrichtung T (siehe Figur 1) eine erste Kamera umfassen, die vor der Wendeeinrichtung angeordnet ist und die Produkte aus einer ersten Richtung aufnimmt und eine zweite Kamera umfassen, die stromab der Wendeeinrichtung angeordnet ist und die Produkte in gewendetem Zustand aufnimmt. Beide Kameras können in diesem Fall bspw. oberhalb der Transportebene angeordnet sein oder auf derselben Seite der Transporteinrichtung, um die Produkte zu betrachten. Hierdurch wird sichergestellt, dass die Kameras unterschiedliche Seiten der Produkte aufnehmen.

## Patentansprüche

1. Wiegevorrichtung (100) zum Wiegen von Produkten (130), die Wiegevorrichtung umfassend einen Wiegebereich (101), eine Transporteinrichtung (103) zum Transportieren von Produkten zum Wiegebereich, eine Erkennungseinrichtung (102) stromauf des Wiegebereichs und eine Steuereinheit (180), wobei die Erkennungseinrichtung (102) zum Erkennen einer zweidimensionalen Kontur eines Produktes (130) in der Transporteinrichtung ausgebildet ist und wobei die Steuereinheit (180) ausgebildet ist, ein Wiegen des Produktes im Wiegebereich basierend auf der erkannten Kontur zu steuern und/oder eine Bearbeitung des Produktes basierend auf der erkannten Kontur und/oder einem Wiegeergebnis im Wiegebereich zu steuern.

2. Wiegevorrichtung (100) nach Anspruch 1, wobei die Steuereinheit (180) ausgebildet ist, basierend auf der erkannten Kontur zu bestimmen, ob ein Produkt aus einem oder mehreren Stücken (133, 134) besteht.

3. Wiegevorrichtung (100) nach Anspruch 1 oder 2, wobei die Erkennungseinrichtung (102) eine Kamera und/oder eine Vielzahl von Lichtschranken umfasst.

4. Wiegevorrichtung (100) nach einem der Ansprüche 1 bis 3, wobei die Bearbeitung ein Sortieren (242) von Produkten umfasst.

5. Wiegevorrichtung (100) nach einem der Ansprüche 1 bis 4, wobei die Steuereinheit ausgebildet ist, basierend auf der erkannten Kontur einen Zustand einer stromauf angeordneten Bearbeitungskomponente zum Bearbeiten der Produkte zu bestimmen.

6. Wiegevorrichtung (100) nach einem der Ansprüche 1 bis 5, wobei die Bearbeitung stromauf des Wiegebereichs erfolgt oder wobei die Bearbeitung stromab des Wiegebereichs erfolgt.

7. Wiegevorrichtung (100) nach Anspruch 6, wobei stromauf des Wiegebereichs (101) und stromab der Erkennungseinrichtung (102) eine Schneideinrichtung (104) angeordnet ist und wobei die Bearbeitung ein Schneiden des Produktes (130) basierend auf der erkannten Kontur umfasst.

8. Wiegevorrichtung (100) nach einem der Ansprüche 1 bis 7, wobei die Steuereinheit (180) ausgebildet ist, basierend auf dem Wiegeergebnis und/oder der erkannten Kontur eine Ausgabe an einen Bediener auf einer Anzeigevorrichtung zu bewirken.

9. Verfahren zum Wiegen von Produkten (130) mit einer Wiegevorrichtung (100), die Wiegevorrichtung umfassend einen Wiegebereich (101), eine Transporteinrichtung (103) zum Transportieren von Produkten zum Wiegebereich, eine Erkennungseinrichtung (102) stromauf des Wiegebereichs und eine Steuereinheit, wobei die Erkennungseinrichtung zum Erkennen einer zweidimensionalen Kontur eines Produktes in der Transporteinrichtung ausgebildet ist und wobei das Verfahren ein Steuern des Wiegens (221, 233, 241) des Produktes im Wiegebereich basierend auf der erkannten Kontur und/oder ein Steuern einer Bearbeitung (222, 243) des Produktes basierend auf der erkannten Kontur und/oder einem Wiegeergebnis im Wiegebereich umfasst.

10. Verfahren nach Anspruch 9, wobei die Steuereinheit (180) basierend auf der erkannten Kontur bestimmt, ob ein Produkt (130) aus einem oder mehreren Stücken (133, 134) besteht.

11. Verfahren nach Anspruch 9 oder 10, wobei die Erkennungseinrichtung (102) eine Kamera und/oder eine Vielzahl von Lichtschranken umfasst.

12. Verfahren nach einem der Ansprüche 9 bis 11, wobei die Bearbeitung ein Sortieren (242) von Produkten umfasst.

13. Verfahren nach einem der Ansprüche 9 bis 12, wobei die Steuereinheit (180) basierend auf der erkannten Kontur einen Zustand einer stromauf angeordneten Bearbeitungskomponente zum Bearbeiten der Produkte (130) bestimmt.

14. Verfahren nach einem der Ansprüche 9 bis 13, wobei die Bearbeitung stromauf des Wiegebereichs (101) erfolgt, wobei optional stromauf des Wiegebereichs und stromab der Erkennungseinrichtung (102) eine Schneideinrichtung (104) angeordnet ist und wobei die Bearbeitung ein Schneiden des Produktes (130) basierend auf der erkannten Kontur umfasst; oder wobei die Bearbeitung stromab des Wiegebereichs (102) erfolgt.

15. Verfahren nach einem der Ansprüche 9 bis 14, wobei die Steuereinheit (180) basierend auf dem Wiegeergebnis und/oder der erkannten Kontur eine Ausgabe an einen Bediener auf einer Anzeigevorrichtung bewirkt.
